# EUROPÄISCHE PATENTANMELDUNG

(11) **EP 2 535 164 A1**
(43) Veröffentlichungstag der Anmeldung: **19.12.2012**
(21) Anmeldenummer: 11305754.1
(22) Anmeldetag: 17.06.2011
(51) Int. Cl.: B29C 47/08, B29C 47/02, B29C 47/28

(54) **Vorrichtung zum Entfernen von Spritzmaterial aus der Austrittsöffnung eines Extruderkopfs**

(71) Anmelder: Nexans, 75008 Paris (FR)
(72) Erfinder: Krause, Thomas, 31542 Bad Nenndorf (DE); Winzer, Wilfried, 31553 Sachsenhagen (DE); Egerer, Ralf, 38723 Seesen (DE)
(74) Vertreter: Döring, Roger

(57) **Zusammenfassung**

Es wird eine Vorrichtung zum Entfernen von Spritzmaterial aus einem Extruderkopf eines Extruders angegeben, welcher an seiner Austrittsöffnung ein lösbar angebrachtes Mundstück aufweist, das beim Betrieb des Extruders einen zur Führung des Spritzmaterials dienenden Spritzkanal begrenzt. Für das Entfernen des Spritzmaterials wird ein Werkzeugs (W) verwendet, das einen am Extruderkopf zu befestigenden, ringförmigen Träger (14) aufweist, der in Arbeitsposition nach Entfernung des Mundstücks an der Austrittsöffnung des Extruderkopfes festgelegt ist, und welches ein in Umfangsrichtung des Trägers (14) rundum drehbares und justierbares Messer (18) aufweist, das innen am Träger (14) angebracht ist und auf einer Seite etwa in Achsrichtung desselben aus dem Träger (14) herausragt.

## Beschreibung

Die Erfindung bezieht sich auf eine Vorrichtung zum Entfernen von Spritzmaterial aus einem Extruderkopf eines Extruders, welcher an seiner Austrittsöffnung ein lösbar angebrachtes Mundstück aufweist, das beim Betrieb des Extruders einen zur Führung des Spritzmaterials dienenden Spritzkanal begrenzt.

Extruder oder auch Spritzgießmaschinen sind beispielsweise in dem DE-Buch "Kabel und Leitungen" von Jan Artbauer, VEB Verlag Technik, 1961, Seiten 406 bis 415 beschrieben. Sie sind zur Erzeugung unterschiedlichster Teile und Formen aus Kunststoff seit langem bekannt und überall auf der Erde im Einsatz. Extruder werden beispielsweise zur Herstellung von Mänteln elektrischer und auch optischer Kabel verwendet, die um eine vorgefertigte Kabelseele herumgespritzt werden. In allen Fällen besteht das Problem, daß nach Beendigung eines Fertigungsvorgangs restliches, in der Austrittsöffnung des Extruderkopfes verbliebenes Spritzmaterial möglichst schnell aus derselben entfernt werden muß, damit es nicht zu fest wird und damit der Extruder für eine folgende Fertigung wieder verwendet werden kann. Zum Entfernen derartigen Spritzmaterials wird in bekannter Technik zunächst das Mundstück von der Austrittsöffnung des Extruderkopfes entfernt. Die Austrittsöffnung bzw. der Spritzkanal ist dann soweit zugänglich, daß das Spritzmaterial unter Einsatz eines Werkzeugs entfernt werden kann. Ein solches Werkzeug ist beispielsweise eine aus Messing bestehende, von Hand zu betätigende Metallstange mit einer gebogenen Spitze oder auch ein Metallhaken, mit der bzw. dem das Spritzmaterial aus der Austrittsöffnung des Extruderkopfes herausgekratzt wird. Dieser Vorgang ist anstrengend und erfordert relativ viel Zeit. Es besteht dabei auch die Gefahr, daß die Oberfläche der Wandung des Extruderkopfes beschädigt wird.

Der Erfindung liegt die Aufgabe zugrunde, das Entfernen von nach einem Fertigungsvorgang in der Austrittsöffnung eines Extruderkopfes verbliebenem Spritzmaterial zu vereinfachen.

Diese Aufgabe wird gemäß der Erfindung durch die Verwendung eines Werkzeugs gelöst, das einen am Extruderkopf zu befestigenden, ringförmigen Träger aufweist, der in Arbeitsposition nach Entfernung des Mundstücks an der Austrittsöffnung des Extruderkopfes festgelegt ist, und welches ein in Umfangsrichtung des Trägers rundum drehbares und justierbares Messer aufweist, das innen am Träger angebracht ist und auf einer Seite etwa in Achsrichtung desselben aus dem Träger herausragt.

Mit dem Werkzeug dieser Vorrichtung kann das nach Beendigung eines Fertigungsvorgangs im Spritzkanal eines Extruderkopfes verbliebene Spritzmaterial auf einfache Art und Weise und insbesondere schnell entfernt werden. Für die Anbringung des Werkzeugs wird das an der Austrittsöffnung des Extruderkopfes vorhandene Mundstück zunächst entfernt. Anschließend wird der Träger des Werkzeugs an der Austrittsöffnung so befestigt, daß das Messer in den Spritzkanal des Extruderkopfes hineinragt. Danach braucht das Messer nur noch zumindest einmal um mindestens 360° im Träger und damit im Spritzkanal gedreht zu werden, um das Spritzmaterial von der Wandung desselben zu lösen. Es kann dann aus der Austrittsöffnung des Extruderkopfes bzw. aus dem Spritzkanal herausgenommen werden kann. Das Messer ist am Träger justierbar angebracht, so daß es auf die Abmessungen der zu reinigenden Austrittsöffnung des Extruderkopfes eingestellt werden kann. Es ist dazu mit Vorteil in seiner Längsrichtung verstellbar am Träger angebracht.

Das Messer ragt etwa in Achsrichtung des Trägers aus demselben heraus. Das bedeutet, daß das Messer sowohl parallel zur Achse des Trägers und damit des Werkzeugs, aber auch unter Einschluß eines spitzen Winkels zu dieser Achse verlaufen kann. Die jeweilige Richtung des Messers hängt vom Verlauf des Spritzkanals ab, aus dem Spritzmaterial entfernt werden soll.

Ein Ausführungsbeispiel des Erfindungsgegenstandes ist in den Zeichnungen dargestellt.

Es zeigen:
Fig. 1 schematisch eine Seitenansicht eines Extruders.
Fig. 2 ebenfalls schematisch einen Querschnitt durch einen Extruderkopf.
Fig. 3 eine Seitenansicht eines in der Vorrichtung nach der Erfindung verwendbaren Werkzeugs.
Fig. 4 einen Schnitt durch das Werkzeug nach Fig. 3.
Fig. 5 eine Draufsicht auf das Werkzeug nach Fig. 3.

Das in der Vorrichtung nach der Erfindung einzusetzende Werkzeug wird nach Entfernen des Mundstücks vom Extruderkopf vorzugsweise zentrisch an dessen Austrittsöffnung befestigt. Das kann in Abhängigkeit von den baulichen Gegebenheiten des Extruderkopfes auf unterschiedliche Art und Weise erfolgen, beispielsweise mittels einer Schraubverbindung oder einer Flanschverbindung. In der folgenden Beschreibung wird - stellvertretend für alle anderen möglichen Befestigungsarten - davon ausgegangen, daß am Extruderkopf ein Innengewinde vorhanden ist, das zur Festlegung des Mundstücks an demselben dient. Das Werkzeug ist dementsprechend mit einem zu dem Innengewinde passenden Außengewinde ausgerüstet.

Das Messer kann - wie bereits erwähnt - parallel zur Achse des Werkzeugs, aber mit Vorteil auch unter einem spitzen Winkel zu derselben verlaufen. In der folgenden Beschreibung wird ein entsprechend schräger Verlauf des Messers als bevorzugte Ausführungsform berücksichtigt, weil die zu reinigenden Spritzkanäle in der Regel nicht parallel zur Achse des Extruderkopfes verlaufen, sondern schräg zu derselben.

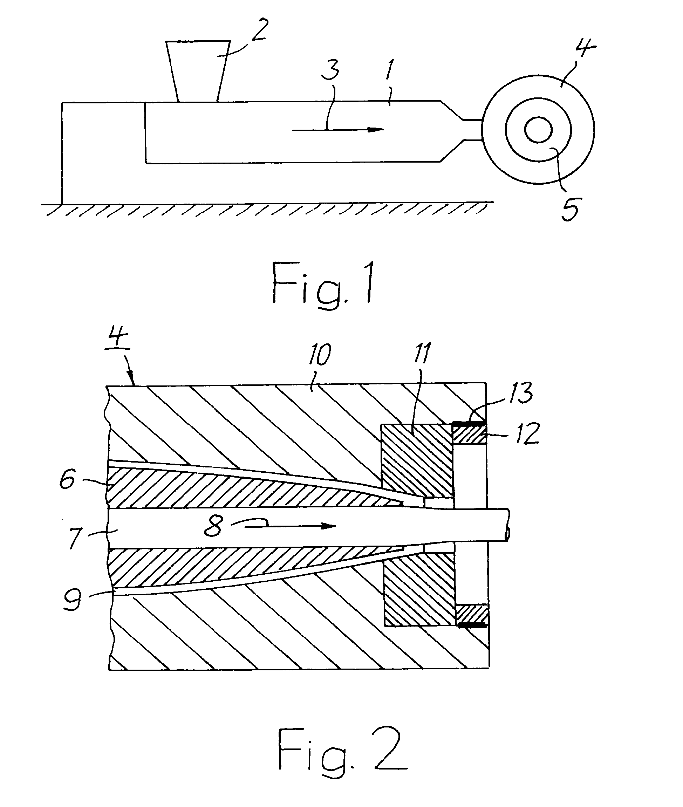

Der in Fig. 1 schematisch dargestellte Extruder hat ein Extrudergehäuse 1, in dem mindestens eine nicht mit dargestellte Schnecke drehbar angeordnet ist, die während des Betriebes des Extruders von einem Motor angetrieben wird. Am Extrudergehäuse 1 ist ein Einfülltrichter 2 zum Einfüllen von Spritzmaterial angebracht, das durch die Schnecke in Richtung des Pfeiles 3 durch das Extrudergehäuse 1 zu einem Extruderkopf 4 bewegt wird. Aus der Austrittsöffnung 5 desselben tritt Spritzmaterial aus, das innerhalb des Extruders behandelt und von der Schnecke gefördert worden ist.

Der Extruderkopf 4 weist ein zentrales, von einer Matrize 6 umgebenes Durchgangsloch 7 auf, durch welches ein Strang, beispielsweise eine Kabelseele, in Richtung des Pfeiles 8 hindurchbewegt werden kann, um welchen das vom Extruder erzeugte Spritzmaterial herum extrudiert wird. Das Spritzmaterial wird durch einen vom Extrudergehäuse 1 kommenden, das Durchgangsloch 7 rundum umgebenden Spritzkanal 9 geführt, der zwischen der Matrize 6 und einem Gehäuse 10 des Extruderkopfes 4 verläuft. An seinem Ende wird der Spritzkanal 9 durch ein zum Extruderkopf 4 gehörendes Mundstück 11 begrenzt, das im dargestellten Ausführungsbeispiel durch eine Ringschraube 12 gehalten ist, die in das Gehäuse 10 des Extruderkopfes 4 eingeschraubt ist. Sie hat ein Außengewinde und greift in ein entsprechendes Innengewinde 13 des Gehäuses 10 ein. Im Extrudergehäuse 4 ist entsprechend der dargestellten Ausführungsform ein Spritzkanal 9 vorhanden. Es können aber auch zwei oder mehr Spritzkanäle in einem Extruderkopf angebracht sein.

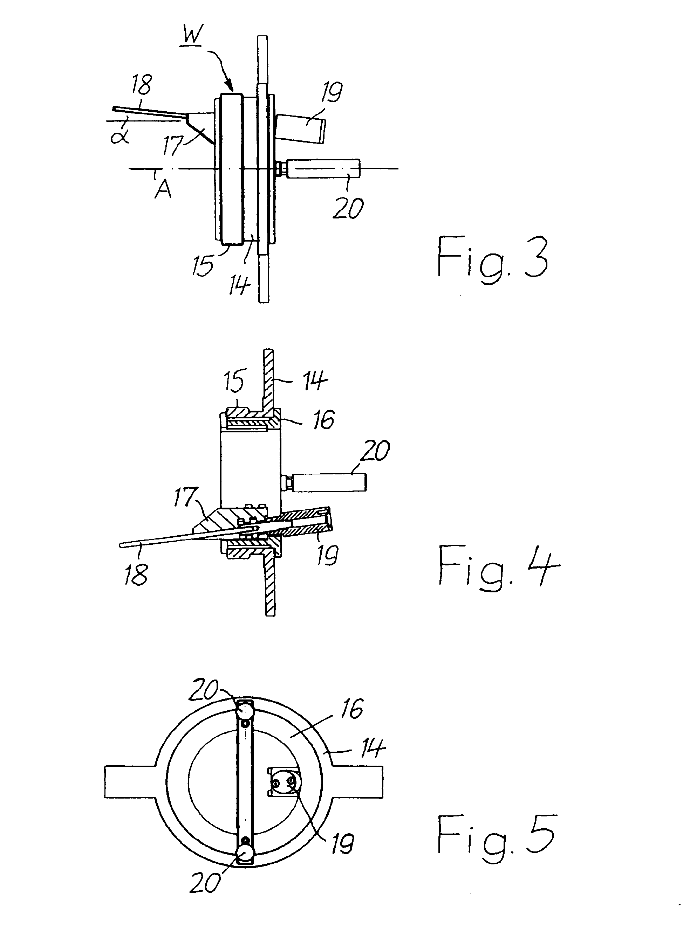

Zum Entfernen von Spritzmaterial, das nach Beendigung einer Fertigung im Spritzkanal 9 des Extruderkopfes 4 verblieben ist, kann ein in den Fig. 3 bis 5 dargestelltes Werkzeug W eingesetzt werden. Es hat einen ringförmigen Träger 14 mit einem Außengewinde 15, das dem Innengewinde 13 des Extruderkopfes 4 entspricht. In Arbeitsposition ist das Werkzeug W in die Austrittsöffnung 5 des Extruderkopfes 4 eingeschraubt. Im Träger 14 des Werkzeugs W ist ein ringförmiger Werkzeughalter 16 frei drehbar gelagert. Am Werkzeughalter 16 ist ein Messerhalter 17 angebracht, in dem ein Messer 18 befestigt ist, das unter einem spitzen Winkel α schräg zur Achse A des Werkzeugs W verläuft und in Arbeitsposition in den Spritzkanal 9 des Extruderkopfes 4 hineinragt. Das Messer 18 ist in seiner Längsrichtung verstellbar am Messerhalter 17 angeordnet. Dazu kann am Messerhalter 17 ein Justierelement 19 angebracht sein. Am Werkzeughalter 16 ist außerdem mindestens ein Griff 20 befestigt, mit dem derselbe von Hand im Träger 14 gedreht werden kann. Entsprechend Fig. 5 sind am Werkzeughalter 16 zwei Griffe 19 angebracht.

Das Werkzeug W besteht insgesamt aus Metall. Dabei sind die Materialien von Träger 14 und Werkzeughalter 16 mit Vorteil so aufeinander abgestimmt, daß der Werkzeughalter 16 möglichst verschleißfrei im Träger 14 gedreht werden kann. In diesem Sinne besteht der Träger 14 beispielsweise aus Edelstahl, während für den Werkzeughalter 16 beispielsweise Bronze eingesetzt ist. Zwischen beiden Teilen könnte aber auch ein Drehlager angeordnet sein, beispielsweise ein Nadellager.

Zum Entfernen von Spritzmaterial aus dem Spritzkanal 9 des Extruderkopfes 4 wird beispielsweise wie folgt vorgegangen.

Die Ringschraube 12 wird aus dem Gehäuse 10 des Extruderkopfes 4 herausgeschraubt. Danach wird das Mundstück 11 entfernt, so daß der Spritzkanal 9 zugänglich ist. In das Innengewinde 13 des Extruderkopfes 4 wird dann das Werkzeug W mittels des Außengewindes 15 des Trägers 14 eingeschraubt. Das Messer 18 ragt danach in den Spritzkanal 9 hinein und liegt zumindest mit seiner Spitze an der Außenwandung desselben an. Anschließend wird der Werkzeughalter 16 mittels der Griffe 20 in Umfangsrichtung des Trägers 14 mindestens einmal um mindestens 360° gedreht. Im Spritzkanal 9 verbliebenes Spritzmaterial wird dadurch von der Wandung desselben gelöst.

Das Messer 18 kann mittels des Justierelements 19 in seiner Längsrichtung und damit in seiner aus dem Träger 14 herausragenden axialen Länge verstellt werden, so daß es unterschiedlich weit in den Spritzkanal 9 hineinragen kann. Es wird mit Vorteil während des Reinigungsvorgangs auf mindestens zwei unterschiedliche Längen eingestellt und jeweils - so wie beschrieben - im Spritzkanal 9 gedreht. Mittels des Justierelements 19 kann gegebenenfalls auch der spitze Winkel α, unter dem das Messer 18 zur Achse A des Werkzeugs W verläuft, verändert werden. Sein Verlauf kann dadurch auf einfache Weise an den Verlauf des Spritzkanals 9 angepaßt werden.

## Patentansprüche

1. Vorrichtung zum Entfernen von Spritzmaterial aus einem Extruderkopf eines Extruders, welcher an seiner Austrittsöffnung ein lösbar angebrachtes Mundstück aufweist, das beim Betrieb des Extruders einen zur Führung des Spritzmaterials dienenden Spritzkanal begrenzt, **gekennzeichnet durch,** die Verwendung eines Werkzeugs (W), das einen am Extruderkopf (4) zu befestigenden, ringförmigen Träger (14) aufweist, der in Arbeitsposition nach Entfernung des Mundstücks (11) an der Austrittsöffnung des Extruderkopfes (4) festgelegt ist, und welches ein in Umfangsrichtung des Trägers (14) rundum drehbares und justierbares Messer (18) aufweist, das innen am Träger (14) angebracht ist und auf einer Seite etwa in Achsrichtung desselben aus dem Träger (14) herausragt.

2. Vorrichtung nach Anspruch 1, **dadurch gekennzeichnet, daß** der Träger (14) des Werkzeugs (W) ein Außengewinde (15) aufweist, mittels dessen er in Arbeitsposition in ein entsprechendes, am Extruderkopf (4) vorhandenes Innengewinde (13) eingeschraubt ist.

3. Vorrichtung nach Anspruch 1 oder 2, **dadurch gekennzeichnet, daß** das Messer (18) unter einem spitzen Winkel (α) zur Achse (A) des Werkzeugs (W) verläuft.

4. Vorrichtung nach einem der Ansprüche 1 bis 3, **dadurch gekennzeichnet, daß** das Messer (18) an einem Messerhalter (17) angebracht ist, der an einem in dem Träger (14) in dessen Umfangsrichtung frei drehbar gelagerten, ringförmigen Werkzeughalter (16) befestigt ist.

5. Vorrichtung nach einem der Ansprüche 1 bis 4, **dadurch gekennzeichnet, daß** das Messer (18) in seiner Längsrichtung verstellbar am Messerhalter (17) angebracht ist.
